# EUROPÄISCHE PATENTSCHRIFT

(11) **EP 0 557 326 B1**
(45) Veröffentlichungstag und Bekanntmachung des Hinweises auf die Patenterteilung: **22.03.1995**
(21) Anmeldenummer: 91919441.5
(22) Anmeldetag: 12.11.1991
(51) Int. Cl.: C12C 7/14

(54) **LÄUTERVERFAHREN UNTER DRUCK**
PROCESS FOR STRAINING UNDER PRESSURE
PROCEDE DE FILTRATION SOUS PRESSION

(30) Priorität: 13.11.1990 DE 4036078
(43) Veröffentlichungstag der Anmeldung: 01.09.1993
(73) Patentinhaber: ANTON STEINECKER ENTWICKLUNGS GmbH & Co., D-85318 Freising (DE)
(72) Erfinder: STIPPLER, Kurt, D-8051 Marzling (DE)
(74) Vertreter: Grünecker, Kinkeldey, Stockmair & Schwanhäusser Anwaltssozietät
(86) Internationale Anmeldenummer: EP9102141
(87) Internationale Veröffentlichungsnummer: WO9208782

(56) Entgegenhaltungen:
- EP-A- 265 152
- EP-A- 362 793
- FR-A- 2 202 157
- FR-A- 2 311 843

## Beschreibung

Die Erfindung betrifft ein Verfahren zum Läutern von Maische in einem Läuterbottich für die Bierherstellung.

Der Läutervorgang bildet einen der wichtigsten Verfahrensschritte bei der Bierherstellung. Bekanntermaßen wird die Würze beim Läutern dadurch gewonnen, daß man die festen Bestandteile der Maische von den flüssigen trennt. Die festen Bestandteile bleiben auf dem Boden des Läuterbottichs zurück, während die Würze dann am Boden des Behälters abgezogen werden kann. Die zuerst ablaufende Würze wird dabei als Vorderwürze bezeichnet. Wenn diese abgezogen ist, bleibt in den Trebern noch eine beträchtliche Menge Extrakt zurück. Um diesen Rest zu gewinnen, werden die Treber mit heißem Wasser ausgelaugt. Dieses Verfahren nennt man dann Anschwänzen oder Überschwänzen. Das dann zuletzt von den Trebern ablaufende extraktarme Wasser wird als Glattwasser bezeichnet.

Der Treberkuchen setzt sich im rufe des Läutervorgangs immer mehr zusammen. Es ist daher üblich, mit einer Aufhackvorrichtung, die rotierend im Läuterbottich umläuft, zumindest von Zeit zu Zeit den Treberkuchen aufzuhacken bzw. aufzulockern.

Seit einiger Zeit wird angestrebt, den Läutervorgang möglichst so durchzuführen, daß der aufgelockerte Treberkuchen mit möglichst wenig Sauerstoff in Berührung kommt, weil man festgestellt hat, daß die Qualität und insbesondere auch die Haltbarkeit der Biere bei zuviel Sauerstoffeintrag während des Läuterns negativ beeinträchtigt wird (s. Veröffentlichung des Erfinders in "MBAA Technical Quarterly" Vol. 23, Seite 54 bis 61 1988). Auch in der DE-OS 39 42 980 wird dieses Problem angesprochen. Es wird dort insbesondere der beim Anschwänzvorgang übliche Luftsauerstoffeintrag in den Treberkuchen als nachteilig angesprochen und es wird zur Minderung dieses Problems vorgeschlagen, daß man das Anschwänzwasser über die Tragarme der Aufhackvorrichtung in den Treberkuchen einträgt. Dadurch soll erreicht werden, daß das Anschwänzwasser entsprechend dicht über den Treberkuchen verspritzt und dadurch die Menge des vom Anschwänzwasser mitgerissenen Luftsauerstoffs insgesamt reduziert wird.

Der Erfindung liegt die Aufgabe zugrunde, ein gegenüber dem Stand der Technik noch verbessertes Läuterverfahren vorzuschlagen.

Erreicht wird dies bei dem erfindungsgemäßen Verfahren dadurch, daß der Läutervorgang zumindest teilweise unter durch Einspeisung von Inertgas erzeugtem Überdruck durchgeführt wird.

Diese Verfahrensführung hat gegenüber allen bisherigen Läuterverfahren bedeutende Vorteile. Zum einen wird durch die während des Läutervorgangs zumindestens phasenweise erfolgende Erzeugung des Überdrucks ein Auspressen des Treberkuchens erreicht, was zur Folge hat, daß die Vorderwürzeausbeute, der sog. Vorderwürzeextrakt, deutlich erhöht werden kann.

Insbesondere bei schlechter Malzqualität, bei der der Treberwiderstand relativ hoch ist, läßt sich durch die Erzeugung des Überdrucks eine Verbesserung erzielen. Des weiteren ergeben sich dadurch verkürzte Läuterzeiten, weil das Durchlaufen der Flüssigkeit durch den Treberkuchen "künstlich" beschleunigt wird. Die bessere Vorderwürzeausbeute führt dann letztlich auch in gewünschter Weise zu niedrigerem Glattwasserextrakt.

An sich ist das Auspressen der Treberkuchen bereits bekannt. Würde man jedoch das Auspressen mit der üblicherweise im Läuterbottich befindlichen Luft unter Überdruck stattfinden lassen, so würde der an sich nicht erwünschte Sauerstoffeintrag in den Treberkuchen noch gefördert. Man hat deshalb bisher davon abgesehen, im Läuterbottich unter Überdruck zu arbeiten. Nachdem die Erfindung jedoch für die Erzeugung des Überdrucks Inertgas verwendet, können die angestrebten Vorteile erreicht werden, ohne daß es sich nachteilig auf die Bierqualität auswirkt. Im Gegenteil, die Bierqualität und insbesondere auch die Haltbarkeit wird noch verbessert, weil die Atmosphäre, in der der Läutervorgang stattfindet, eine Inertgasatmosphäre ist, so daß der Treberkuchen nur unwesentlich oder überhaupt keinen Sauerstoff aufnimmt.

Im einzelnen ergeben sich sehr viele Varianten für das erfindungsgemäße Verfahren.

So kann es von Vorteil sein, den Überdruck in Abhängigkeit des Treberwiderstands zu wählen. Nachdem der Treberwiderstand im Laufe des Läuterverfahrens bekanntermaßen zunimmt und von Zeit zu Zeit über die Aufhackvorrichtung wieder verringert werden kann, kann es günstig sein, den Überdruck an die Treberwiderstandswerte anzupassen, wobei möglichst eine jeweils geringe Druckdifferenz anzustreben ist. Man kann hier auch eine automatische Regelung vorsehen. Hierzu wäre es lediglich erforderlich, in bekannterweise den Treberwiderstand zu messen und das Ergebnis in einen Regler zu geben, der entsprechend den Überdruck durch Zuspeisung oder Entweichenlassen des Inertgases aus dem Läuterbottich beeinflußt.

Den Treberwiderstand kann man auf verschiedene Art und Weise erfassen. Es ist zum einen möglich, Druckdifferenzmessungen durchzuführen, wobei der Druck oberhalb des Treberkuchens einerseits und am Boden des Läuterbottichs, d.h. also unterhalb des Treberkuchens andererseits gemessen und dann die Werte miteinander verglichen werden. Je höher die Druckdifferenz, desto größer der Treberwiderstand. Es ist aber auch möglich, den Treberwiderstand indirekt dadurch zu erfassen, daß man den Durchfluß ein einer Entnahmeleitung mißt, wie das im einzelnen bereits in der DE-PS 38 44 389 beschrieben worden ist. Sowohl durch die Druckdifferenzmessung als auch durch die Durchflußmessung erhält man die gewünschten Aussagen über den Treberwiderstand und kann dann entsprechend den Überdruck einstellen. Die Durchflußmessung hat sich dabei insbesondere als vorteilhaft herausgestellt.

Selbstverständlich ist es nicht erforderlich, daß die Inertgasatmosphäre im Läuterbottich vollständig nur Inertgas enthält. Bereits durch einen prozentualen Anteil von wenigstens 20 % Inertgas, ergibt sich eine spürbare Verbesserung im Hinblick auf das angestrebte Ergebnis.

Als Inertgas kann z.B. Stickstoff oder auch CO₂ oder ein Gemisch Frage kommen. Auch eine Heliumeinspeisung ist denkbar, obwohl Helium relativ teuer ist. Da jedoch die Möglichkeit besteht, das Helium im Kreislauf umzuführen, können die Verluste gering gehalten werden.

Auch durch eine gezielte Inertgaseinspeisung, etwa in den Bereich kurz überhalb des maximalen Füllstands des Läuterbottichs, kann schon eine vorteilhafte Wirkung erzielt werden. Das dann über die Oberfläche des Wasser-Maische-Gemisches hinwegstreichende Inertgas bildet eine Zwischenschicht zwischen der darüber sich befindenden Restluft und der Flüssigkeit, so daß auch hier ein direkter Sauerstoffeintrag verhindert wird. Es wäre in diesem Zusammenhang auch denkbar, das Inertgas beim Anschwänzvorgang derart einzuspeisen, daß es die Spritzdüsen, mit denen das Anschwänzwasser eingetragen wird, umspült, so daß auch hier eine Luftmitnahme der Restluft im Läuterbottich herabgesetzt werden kann.

Der Druckwert muß nicht während des gesamten Läutervorgangs konstant gehalten werden. Er kann auch während des vorgangs erhöht oder erniedrigt werden. Als geeignete Druckwerte haben sich solche zwischen 10 und 100 mb, insbesondere zwischen 20 und 50 mb erwiesen.

Eine Vorrichtung zur Durchführung des erfindungsgemäßen Verfahrens ist dadurch gekennzeichnet, daß der Läuterbottich druckdicht ausgebildet ist und mit wenigstens einem Einlaß zum Einspeisen von Inertgas versehen ist. Diese Maßnahmen bilden die Voraussetzung, daß man im Läuterbottich die geeigneten Überdruckwerte erzeugen kann.

In weiterer vorteilhafter Ausgestaltung ist vorgesehen, daß dem Läuterbottich ein Druckgasspeicher zum Speichern und Rezirkulieren des Inertgases zugeordnet ist. Der Druckgasspeicher kann dann, wenn der Einlaß am Läuterbottich geöffnet wird, das Gas in den Läuterbottich einspeisen und kann dann, wenn eine Belüftung des Läuterbottichs erforderlich ist, zuvor über eine Pumpe das Inertgas entnehmen und dann wieder speichern, bis erneut die Unterdrucksetzung des Läuterbottichs stattfindet.

In vorteilhafter Weise wird das Verfahren bei einem Läuterbottich angewandt, der mit einer drehbar angetriebenen Aufhackvorrichtung versehen ist. Beim erfindungsgemäßen Verfahren und bei der erfindungsgemäßen Vorrichtung besteht die Möglichkeit, immer wieder bzw. sogar kontinuierlich die Aufhackvorrichtung zu betreiben, ohne daß die Gefahr besteht, daß durch zu starkes Auflockern des Treberkuchens zuviel Sauerstoff in denselben eingetragen wird, weil eine Inertgasatmosphäre im Läuterbottich erzeugt wird. Zur Druckdichtmachung des Läuterbottichs kann in einfachster Weise im Läuterbottichabzug eine Verschlußklappe angeordnet sein, deren Öffnungsstellungen variabel einstellbar sind. Damit läßt sich die gewünschte Druckregelung oder auch Steuerung in einfachster Weise herbeiführen.

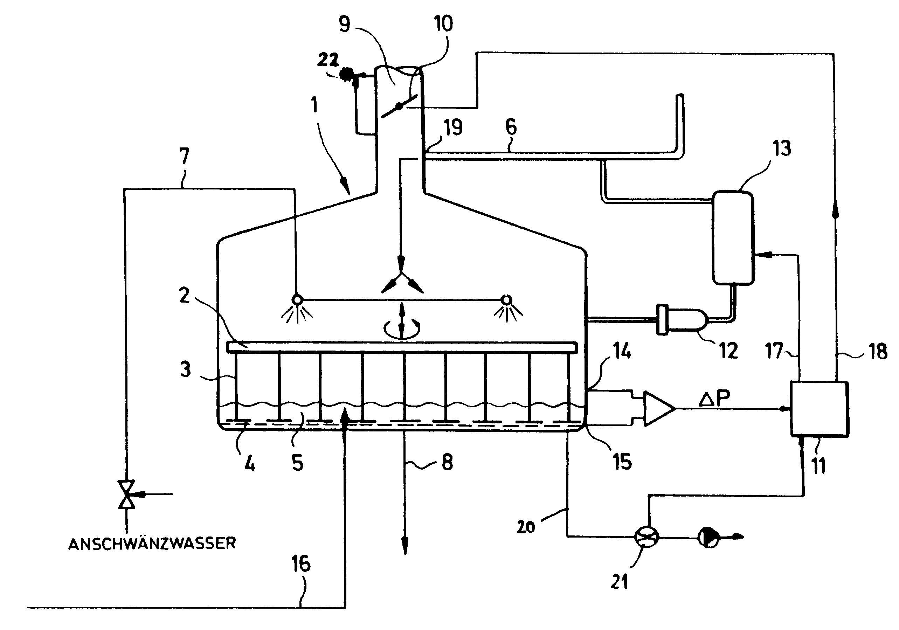

Die Erfindung wird im folgenden anhand des in der Zeichnung dargestellten Ausführungsbeispiels weiter erläutert und beschrieben.

Die einzige Figur zeigt ein Fließschema einer erfindungsgemäßen Vorrichtung, anhand derer auch die Verfahrensführung im folgenden erläutert wird.

Mit 1 ist in der Zeichnung insgesamt ein Läuterbottich bezeichnet, der in an sich bekannter Weise mit einer drehbar antreibbaren Aufhackvorrichtung 2 ausgestattet ist. Die Aufhackvorrichtung trägt Hackmesser 3, die im Bereich des sich beim Läutervorgang am Boden 4 des Läuterbottichs absetzenden Treberkuchens 5 wirken. Wie das im einzelnen geschehen kann, kann beispielsweise der DE-PS 38 44 389 entnommen werden, so daß sich hier eine ausführliche Erläuterung dieser Vorgänge erübrigt.

Der Läuterbottich ist in bekannter Weise mit verschiedenen Zu- und Ableitungen ausgestattet. Schematisch dargestellt ist die Zuleitung 6, über die der zu läuternde Trub eingetragen werden kann. Mit 7 ist die Leitung zum Eintragen des Anschwänzwassers bezeichnet. Die Würze kann am Boden 4 des Läuterbottichs 1 über die dort schematisch angedeutete Leitung 8 abgezogen werden. Erfindungsgemäß ist der Läuterbottich so ausgebildet, daß er einen Überdruck von bis zu ca. 1 bar über Atmosphärendruck aushalten kann. Am Abzug 9 des Läuterbottichs ist eine einstellbare Ventilklappe 10 vorgesehen, die völlig geschlossen oder in unterschiedliche Öffnungsstellungen bringbar ist. Die Stellung dieser Ventilklappe kann über eine zentrale Steuer- und Regeleinheit 11 vorgenommen werden. Des weiteren kann an den Läuterbottich 1 eine Pumpe 12 angeschlossen sein, die mit einem Druckspeicher 13 für Inertgas verbunden ist. Dieser Druckspeicher 13 mündet in die Trubzuleitung 6. Es kann dann, wenn die Trubzuleitung 6 an ihrem freien Ende verschlossen ist (nicht dargestellt), Druck über diese Leitung in das Innere des Läuterbottichs 1 eingeleitet werden.

An dem Läuterbottich sind des weiteren zwei Drucksensoren 14 und 15 angeordnet, die den Treberwiderstand zu bestimmen erlauben. Das Ergebnis dieser Messung wird ebenfalls in der Steuer- und Regeleinheit 11 verarbeitet.

Eine alternative Möglichkeit, den Treberwiderstand zu erfassen, ist in der Zeichnung ebenfalls angedeutet. Dabei wird in einer Entnahmeleitung 20 ein Durchflußmesser 21 angeordnet, der es ermöglicht, in Abhängigkeit der Zeit die Änderungen der Durchflußmenge pro Zeiteinheit zu erfassen. Dieses Ergebnis kann dann ebenfalls in die Steuer- und Regeleinheit 11 eingegeben werden und dann zur Innendrucksteuerung verwertet werden.

Anstelle der in der Zeichnung dargestellten Ventilklappe 10 kann auch an ein ständiges Verschließen der Klappe 10 gedacht sein, wobei dann die Druckregelung über das alternativ dargestellte Überströmventil 22 erfolgen kann.

Im folgenden wird nun eine der möglichen Verfahrensführungen des Läutervorgangs nach der Erfindung beschrieben.

Zum Läutern wird zunächst vom nicht dargestellten Maischgefäß über die Leitung 16 die Maische in den Läuterbottich 1 gepumpt. Wenn dieser Vorgang beendet ist, setzt sich am Boden 4 des Läuterbottichs der Treberkuchen ab, während sich die Vorderwürze über den Treberkuchen ansammelt. Der Läuterbottich kann nun über die Klappe 10 druckdicht verschlossen werden. Nachdem der Läuterbottich druckdicht verschlossen worden ist (dabei werden dann auch die Ventile in den übrigen Zu- und Ableitungen geschlossen) kann über die Pumpe 12 zunächst die im Läuterbottich enthaltene Luft abgesaugt, d.h. zumindest ein Teilvakuum erzeugt werden. Durch Öffnen nicht näher dargestellten Ventile kann sodann aus dem Druckspeicher 13 das dort komprimierte Inertgas eingespeist werden, so daß im Läuterbottich ein Druck von bis zu 1 bar Überdruck erzeugt wird- Dieser Überdruck bewirkt, daß die über dem Treberkuchen sich ansammelnde Vorder- bzw. Stammwürze schneller gewonnen werden kann und am Ende noch ein Teil der verbleibenden Vorderwürze aus dem Treber gedrückt wird. Dadurch wird eine höhere Vorderwürzeausbeute erzielt. Nach Abzug der Vorderwürze über die Leitung 8 kann beim Anschwänzen mit dem über die Leitung 7 eingespeisten Anschwänzwasser keine Luft mit in den Treberkuchen eingespült werden, da sich bereits im Innern des Läuterbottichs ein Überdruck, erzeugt durch eine Inertgasatmosphäre, gebildet hat. Somit wird also während des gesamten Läutervorgangs verhindert, daß zuviel Luft in die Würze bzw. den Treberkuchen eingetragen wird.

Während des Läutervorgangs kann der Treberwiderstand kontinuierlich gemessen werden. Abhängig von diesem Treberwiderstand kann in an sich bekannter Weise die Aufhackvorrichtung auf- und abgesenkt oder auch in Drehbewegung versetzt werden. Darüber hinaus kann aber dieser Treberwiderstand auch dazu herangezogen werden, über geeignete Signalleitungen 17 bzw. 18 den Druck in dem Läuterbottich im Sinne einer Minimierung des Treberwiderstandes zu regeln.

In dem Druckgasspeicher kann Inertgas in der Form von N₂ oder CO₂ oder auch Helium vorgesehen sein. Es kann auch an eine Mischung dieser Gase gedacht sein. Da es die Pumpe 12 ermöglicht, nach Beendigung des Läutervorgangs dann, wenn eine Belüftung des Läuterbottichs erforderlich ist, das Inertgas aus dem Läuterbottich abzusaugen und mit einer ebenfalls nicht dargestellten Kompressorstufe dann in dem Druckgasspeicher 13 erneut zu speichern, kann das Inertgas im Kreislauf eingesetzt werden, so daß keine "Verschwendung" von Inertgas stattfindet.

Die Überdruckerzeugung mit dem Inertgas kann während des gesamten Läutervorgangs stattfinden, es kann aber auch nur in bestimmten Phasen ausreichend sein, mit Überdruck zu arbeiten, beispielsweise dann, wenn Anschwänzwasser zugeführt wird, wenn die Vorderwürze gewonnen wird, oder auch zwischen diesen Phasen.

Durch die Erzeugung des Überdrucks in dem Läuterbottich werden eine ganze Reihe von Vorteilen erreicht, wie beispielsweise die Erhöhung des Vorderwürzeextrakts, keine Oxidation der Würze und die damit einhergehende Qualitätsminderung, weniger Glattwasser, klarere Würze und schließlich auch die Möglichkeit, feineres Schrot zu verwenden. Darüber hinaus wird die Sudfolge erhöht, weil die Läuterzeit verkürzt werden kann. Schließlich ist das Verfahren auch bei schlechten Malzqualitäten mit hohen Treberwiderständen von Vorteil, weil dann das Auspressen der Treber mit Überdruck trotzdem akzeptable Vorderwürzeausbeuten ermöglicht.

## Patentansprüche

1. Verfahren zum Läutern von Maische in einem Läuterbottich für die Bierherstellung,
dadurch **gekennzeichnet**,
daß der Läutervorgang zumindest teilweise unter durch Einspeisung von Inertgas in den Läuterbottich erzeugtem Überdruck durchgeführt wird.

2. Verfahren nach Anspruch 1,
dadurch **gekennzeichnet**,
daß der Überdruck in Abhängigkeit des Treberwiderstands gewählt wird.

3. Verfahren nach Anspruch 1 oder 2,
dadurch **gekennzeichnet**,
daß der Überdruck in Abhängigkeit des Treberwiderstandes und/oder des Durchflusses automatisch geregelt wird.

4. Verfahren nach wenigstens einem der vorangegangenen Ansprüche,
dadurch **gekennzeichnet**,
daß der Überdruck bis zu 1 bar Ü, jedoch vorzugsweise 10 - 100m bar Ü bzw. 20 - 50 m bar gewählt wird.

5. Verfahren nach wenigstens einem der vorangegangenen Ansprüche,
dadurch **gekennzeichnet**,
daß der mittels Inertgas erzeugte Überdruck zumindest in der Phase des Abläuterns der Vorderwürze erzeugt wird.

6. Verfahren nach wenigstens einem der vorangegangenen Ansprüche,
dadurch **gekennzeichnet**,
daß als Inertgas N₂ oder CO₂ oder Helium oder eine Mischung dieser Gase zur Druckerzeugung verwendet wird.

7. Verfahren nach wenigstens einem der vorangegangenen Ansprüche,
dadurch **gekennzeichnet**,
daß das Inertgas nach Verwendung zur Druckerzeugung in einem Druckspeicher zwischengespeichert und dann für die erneute Unterdrucksetzung des Läuterbottichs wiederverwendet wird.

8. Vorrichtung zur Durchführung des Verfahrens nach Anspruch 1,
dadurch **gekennzeichnet**,
daß der Läuterbottich (1) druckdicht ausgebildet ist und mit wenigstens einem Einlaß (19) zum Einspeisen eines inerten Gases versehen ist.

9. Vorrichtung nach Anspruch 8,
dadurch **gekennzeichnet**,
daß dem Läuterbottich (1) ein Druckgasspeicher (13) zum Speichern des Inertgases und zum Rezirkulieren des Inertgases zugeordnet ist.

10. Vorrichtung nach wenigstens einem der Ansprüche 7 oder 8,
dadurch **gekennzeichnet**,
daß der Läuterbottich (1) mit einer drehbar angetriebenen Aufhackvorrichtung (2) versehen ist.

11. Vorrichtung nach Anspruch 10,
dadurch **gekennzeichnet**,
daß die Aufhackvorrichtung heb- und senkbar ist.

12. Vorrichtung nach wenigstens einem der Ansprüche 8 bis 11,
dadurch **gekennzeichnet**,
daß im Abzug (9) des Läuterbottichs (1) ein Verschlußelement (10) angeordnet ist.

13. Vorrichtung nach Anspruch 12,
dadurch **gekennzeichnet**,
daß die Öffnungsstellung des Verschlußelements variabel einstellbar ist.

14. Vorrichtung nach wenigstens einem der vorangegangenen Ansprüche,
dadurch **gekennzeichnet**,
daß eine Vorrichtung (14, 15) zum Messen des Treberwiderstandes vorgesehen ist und daß eine Steuer- bzw. Regelvorrichtung vorhanden ist, die abhängig vom Treberwiderstand die Einspeisung des Inertgases und den im Läuterbottich (1) erzeugten Überdruck steuert bzw. regelt.

## Claims

1. Process for lautering mash in a lauter tun for beer manufacture, characterized in that the lautering operation is carried out at least in part under super-atmospheric pressure generated by feeding inert gas into the lauter tun.

2. Process according to Claim 1, characterized in that the superatmospheric pressure is chosen in dependence on the spent grain resistance.

3. Process according to Claim 1 or 2, characterized in that the superatmospheric pressure is automatically controlled in dependence on the spent grain resistance and/or the flow rate.

4. Process according to at least one of the preceding claims, characterized in that the superatmospheric pressure is selected up to 1 bar gauge, but preferably 10 to 100 mbar gauge or 20 to 50 mbar.

5. Process according to at least one of the preceding claims, characterized in that the superatmospheric pressure generated by means of inert gas is generated at least in the phase of lautering the first wort.

6. Process according to at least one of the preceding claims, characterized in that the inert gas used for pressure generation is N₂ or CO₂ or helium or a mixture of these gases.

7. Process according to at least one of the preceding claims, characterized in that the inert gas, after use for pressure generation, is stored temporarily in a pressure accumulator then reused for the renewed pressurization of the lauter tun.

8. Apparatus for carrying out the process according to Claim 1, characterized in that the lauter tun (1) is designed to be pressure-tight and is furnished with at least one inlet (19) for feeding in an inert gas.

9. Apparatus according to Claim 8, characterized in that a compressed gas accumulator (13), for storing the inert gas and for recirculating the inert gas, is assigned to the lauter tun (1).

10. Apparatus according to at least one of Claims 7 or 8, characterized in that the lauter tun (1) is furnished with a rotatably driven hacking apparatus (2).

11. Apparatus according to Claim 10, characterized in that the hacking apparatus can be elevated and lowered.

12. Apparatus according to at least one of Claims 8 to 11, characterized in that a closing element (10) is arranged in the vent (9) of the lauter tun (1).

13. Apparatus according to Claim 12, characterized in that the opening position of the closing element can be variably adjusted.

14. Apparatus according to at least one of the preceding claims, characterized in that an apparatus (14, 15) for measuring the spent grain resistance is provided and in that an open-loop or closed-loop controller is present which, is dependence on the spent grain resistance, controls the feed of the inert gas and the super-atmospheric pressure generated in the lauter tun (1).

## Revendications

1. Procédé de filtration de moût dans une cuve de filtration pour la fabrication de bière, **caractérisé en ce** que la filtration est réalisée au moins en partie sous une surpression obtenue par injection de gaz inerte dans la cuve de filtration.

2. Procédé selon la revendication 1, caractérisé en ce que la surpression est choisie en fonction de la résistance des drêches.

3. Procédé selon l'une des revendications 1 ou 2, caractérisé en ce que la surpression est réglée automatiquement en fonction de la résistance des drêches et/ou du débit.

4. Procédé selon l'une quelconque des revendications précédentes, caractérisé en ce que la surpression peur atteindre 1 bar et qu'elle est choisie, de préférence, entre 10 et 100 mbars et respectivement entre 20 et 50 mbars.

5. Procédé selon l'une quelconque des revendications précédentes, caractérisé en ce que la surpression établie au moyen d'un gaz inerte est réalisée au moins dans la phase de clarification du premier moût.

6. Procédé selon l'une quelconque des revendications précédentes, caractérisé en ce que du N₂ ou du CO₂ ou de l'hélium ou un mélange de ces gaz est utilisé comme gaz inerte pour la mise sous pression.

7. Procédé selon l'une quelconque des revendications précédentes, caractérisé en ce que le gaz inerte pour la mise sous pression est stocké dans un réservoir sous pression et réutilisé ensuite pour la nouvelle mise sous pression de la cuve de filtration.

8. Dispositif pour la mise en oeuvre du procédé selon la revendication 1, caractérisé en ce que la cuve de filtration (1) est étanche et munie d'au moins une entrée (19) pour l'injection d'un gaz inerte.

9. Dispositif selon la revendication 8, caractérisé en ce qu'à la cuve de filtration (1) est associé un réservoir de gaz sous pression (13) pour le stockage du gaz inerte et pour la recirculation dudit gaz inerte.

10. Dispositif selon l'une des revendications 7 ou 8, caractérisé en ce que la cuve de filtration (1) est équipée d'un dispositif de piochage (2) pouvant être entraîné en rotation.

11. Dispositif salon la revendication 10, caractérisé en ce que le dispositif de piochage peut être monté et abaissé.

12. Dispositif selon l'une quelconque des revendications 8 à 11, caractérisé en ce que dans l'évacuation (9) de la cuve de filtration (1) est disposé un élément d'obturation (10).

13. Dispositif selon la revendication 12, caractérisé en ce que la position d'ouverture de l'élément d'obturation est variable.

14. Dispositif selon l'une quelconque des revendications précédentes, caractérisé en ce qu'il comprend un dispositif (14, 15) pour la mesure de la résistance des drêches et un dispositif de commande et de réglage qui assure la commande et respectivement le réglage de l'alimentation en gaz inerte et la surpression établie dans la cuve de filtration (1), en fonction de la résistance des drêches.
